# EUROPÄISCHE PATENTANMELDUNG

(11) **EP 4 822 323 A1**
(43) Veröffentlichungstag der Anmeldung: **14.10.2026**
(21) Anmeldenummer: 25168866.9
(22) Anmeldetag: 07.04.2025
(51) Int. Cl.: G01M 3/32

(54) **VERFAHREN ZUR DICHTHEITSPRÜFUNG EINES BEHÄLTERS**

(71) Anmelder: Lippok + Wolf GmbH, 73642 Welzheim (DE)
(72) Erfinder: MÜLLER, Stephan, 73667 Kaisersbach (DE); SCHÄFER, Edgar, 73642 Welzheim (DE)
(74) Vertreter: Zurhorst, Stefan

(57) **Zusammenfassung**

Die Erfindung betrifft ein Verfahren zur Dichtheitsprüfung eines Behälters (1). Der Behälter (1) umfasst mindestens einen flexiblen Wandungsabschnitt (2), wobei Maßnahmen zur Begrenzung des Aufblähens getroffen sind. Mittels einer Pumpeinrichtung (6) wird der Innenraum (4) einer geschlossenen Prüfkammer (3) kontrolliert evakuiert. Sofern während der laufenden Evakuierung festgestellt wird, dass zu einem bestimmten Referenzzeitpunkt (t_{R}) die Schnelligkeit der Zunahme des Unterdrucks (pᵤ) anwächst und ein bestimmtes, vorgegebenes Maß überschreitet, wird der zu diesem Referenzzeitpunkt (t_{R}) im Innenraum (4) herrschende Unterdruck als Referenzdruck (p_{R}) festgehalten. Der Referenzdruck (p_{R}) wird als Innendruck im Behälter (1) angesetzt, wobei aus der Differenz eines äußeren Prüfunterdrucks (p_{uP}) zum Innendruck des Behälters (1) sowie aus einer ermittelten Leckrate nach einem vorgegebenen Zusammenhang die Größe des möglicherweise vorhandenen Feinlecks im Behälter (1) bestimmt wird.

## Beschreibung

Die Erfindung betrifft ein Verfahren zur Dichtheitsprüfung eines Behälters mittels eines Dichtheitsprüfsystems.

Empfindliche Produkte insbesondere im Pharma- oder Lebensmittelbereich werden in Behältern aufbewahrt, deren Dichtigkeit sichergestellt und geprüft werden muss. Hierzu sind im Stand der Technik Dichtheitsprüfsysteme bekannt, welche eine Prüfkammer mit einem Innenraum zur Aufnahme des zu prüfenden Behälters umfassen, und welche eine Pumpeinrichtung zur Erzeugung eines Unterdrucks im Innenraum der Prüfkammer aufweisen. Hierdurch soll für Prüfzwecke ein Druckgefälle hergestellt werden zwischen dem Innendruck des zu prüfenden Behälters und dem Druck außenseitig des Behälters, welcher der Unterdruck im Innenraum der Prüfkammer ist. Falls der Behälter ein Leck aufweist, wird in Folge des Druckgefälles Luft oder ein anderes Füllgas aus dem Behälter durch dieses Leck hindurch in die Prüfkammer strömen. Durch geeignete, an sich bekannte Auswertemethoden können hieraus Grob- und auch Feinlecks identifiziert werden.

Falls ein Feinleck vorhanden ist, soll dies während eines bestimmten Prüfzeitfensters bei einer anliegenden Druckdifferenz identifiziert werden. Das aufgrund der anliegenden Druckdifferenz durch das Feinleck aus dem Prüfling in den Innenraum der Prüfkammer nachströmende Gas führt dazu, dass während des Prüfzeitfensters der Druck in der Prüfkammer ansteigt bzw. der aufgebrachte Unterdruck verringert wird. Dies macht sich als zeitlicher Gradient des Unterdrucks bemerkbar. Für die Bestimmung der Höhe des Unterdrucks und dessen zeitlichen Gradienten wird der zeitliche Verlauf des Unterdrucks gemessen. Wegen des geschlossenen Zustandes des Behälters kann aber dessen tatsächlicher Innendruck nicht unmittelbar bestimmt werden. Letzterer wird deshalb ersatzweise mit dem atmosphärischen Druck gleichgesetzt, sodass hieraus zusammen mit dem genau messbaren Unterdruck im Innenraum der Prüfkammer die für die Auswertung der Prüfung erforderliche Druckdifferenz bestimmt werden kann. Aus dem genannten Gradienten und der am Prüfling anliegenden Druckdifferenz können das Vorhandensein eines Feinlecks erkannt und dessen Größe bestimmt werden.

Hiervon zu unterscheiden sind Groblecks und deren Identifikation. Aufgrund ihrer signifikant höheren Leckrate kann es dazu kommen, dass der gewünschte Prüfunterdruck gar nicht erst erreicht wird. In Grenzfällen erreicht der Unterdruck zwar zu Beginn des Prüfzeitfensters das gewünschte Niveau, fällt dann aber im weiteren Verlauf aus dem geeigneten Wertebereich heraus. In solchen Fällen kann das Vorhandensein eines Groblecks identifiziert werden, was die Bestimmung eines Feinlecks obsolet macht.

In der Praxis hat sich gezeigt, dass das vorstehend zusammengefasste Prüfverfahren des Standes der Technik bei zumindest näherungsweise starren Behältern befriedigend funktioniert. Bei flexiblen oder teilflexiblen Behältern, also bei Behältern mit mindestens einem flexiblen Wandungsabschnitt, entstehen jedoch Schwierigkeiten bei der Dichtigkeitsprüfung. Behälter der letztgenannten Art blähen sich bei der Evakuierung der Prüfkammer auf. Das Aufblähen findet in der frühen Phase der Evakuierung statt und schreitet so lange fort, bis der zu prüfende Behälter seine größtmögliche Form angenommen hat, oder bis sich der oder die flexiblen Wandungsabschnitte an eine zugeordnete Stützfläche der Prüfkammer angelegt haben. Derartige Behälter zeigen bei der Anwendung des oben umrissenen Prüfverfahrens Ungenauigkeiten bei der Bestimmung von Grob- und Feinlecks, was auch Unsicherheiten bei der Unterscheidung zwischen Grob- und Feinlecks einschließt.

Der Erfindung liegt die Aufgabe zugrunde ein Verfahren zur Dichtheitsprüfung eines Behälters mit verbesserter Präzision und Zuverlässigkeit anzugeben.

Diese Aufgabe wird durch ein Verfahren mit den Merkmalen des Anspruchs 1 gelöst.

Die Erfindung beruht zunächst auf der Erkenntnis, dass die Genauigkeit der Leckbestimmung wesentlich von der Genauigkeit der ermittelten Druckdifferenz am Prüfling abhängt, und dass der Schwachpunkt bei der Ermittlung der Druckdifferenz in der Bestimmung des Innendrucks vom Prüfling liegt. Die im Stand der Technik vorgenommene Gleichsetzung des Innendrucks mit dem atmosphärischen Druck hat sich für Behälter mit im wesentlichen starrer Wandung als ausreichend genau erwiesen, kann jedoch für Behälter mit mindestens einem flexiblen Wandungsabschnitt zu ungenau sein.

Hierauf aufbauend ist nach der Erfindung ein Verfahren zur Dichtheitsprüfung eines Behälters mittels eines Dichtheitsprüfsystems vorgesehen, wobei der Behälter mindestens einen flexiblen Wandungsabschnitt umfasst, mittels dessen sich der Behälter unter Einwirkung eines äußeren Unterdrucks aufblähen kann, wobei Maßnahmen zur Begrenzung des Aufblähens getroffen sind, wobei das Dichtheitsprüfsystem eine Prüfkammer mit einem Innenraum zur Aufnahme des Behälters, sowie eine Pumpeinrichtung zur Erzeugung eines Unterdrucks im Innenraum der Prüfkammer aufweist, und wobei das Verfahren folgende Verfahrensschritte umfasst:
- Der Behälter wird derart im Innenraum der Prüfkammer fixiert, dass er sich im Bereich seines flexiblen Wandungsabschnittes begrenzt aufblähen kann.
- Mittels der Pumpeinrichtung wird anschließend der Innenraum der geschlossenen Prüfkammer kontrolliert evakuiert, wobei der zeitliche Verlauf eines sich im Innenraum aufbauenden Unterdrucks ermittelt wird, und wobei geprüft wird, wie schnell der Unterdruck im Innenraum zunimmt.
- Sofern während der laufenden Evakuierung festgestellt wird, dass zu einem bestimmten Referenzzeitpunkt die Schnelligkeit der Zunahme des Unterdrucks anwächst und ein bestimmtes, vorgegebenes Maß überschreitet, wird der zu diesem Referenzzeitpunkt im Innenraum herrschende Unterdruck als Referenzdruck festgehalten.
- Die laufende Evakuierung wird fortgesetzt, bis ein Zielereignis erreicht ist, worauf hin die laufende Evakuierung abgebrochen wird.
- Zumindest während eines nachfolgenden, vorgegebenen Prüfzeitintervalls wird die Ermittlung des zeitlichen Verlaufs des Unterdrucks im Innenraum fortgesetzt, wobei während des vorgegebenen Prüfzeitintervalls ein zeitlicher Gradient des Unterdrucks und hieraus eine Leckrate eines möglicherweise vorhandenen Feinlecks im Behälter bestimmt wird.
- Ein zum Prüfzeitintervall gehöriger Unterdruck im Innenraum der Prüfkammer wird als Prüfunterdruck angesetzt, und der Referenzdruck wird als Innendruck im Behälter angesetzt, wobei aus der Differenz des Prüfunterdrucks zum Innendruck des Behälters sowie aus der Leckrate nach einem vorgegebenen Zusammenhang die Größe des möglicherweise vorhandenen Feinlecks im Behälter bestimmt wird.

Erfindungsgemäß wurde zunächst erkannt, dass während des Aufblähens das Volumen des zu prüfenden Behälters steigt, wobei sich dessen Innendruck an den steigenden Unterdruck in der Prüfkammer angleicht. Der tatsächliche Innendruck des Prüflings sinkt also gemeinsam mit dem Prüfkammerdruck deutlich unter den ursprünglich atmosphärischen Druck.

Ab dem Zeitpunkt, bei dem die Maßnahmen zur Begrenzung des Aufblähens greifen, bei dem also der zu prüfende Behälter seine größtmögliche Form angenommen hat, verändern sich jedoch die Bedingungen. Zum einen bleibt das Volumen des Prüflings bei weiter fortschreitender Evakuierung der Prüfkammer im Wesentlichen konstant, womit auch der Behälterinnendruck im Wesentlichen konstant bleibt. Zum anderen steigt bei konstantem Volumen des Prüflings der Unterdruck in der Prüfkammer schneller an als in der frühen Phase der Evakuierung, in der sich der Prüfling aufbläht.

Beide Effekte nutzt die Erfindung: Anhand des Unterdruckverlaufs beim Evakuieren lässt sich feststellen, ob bzw. wann die Schnelligkeit der Zunahme des Unterdrucks anwächst und ein bestimmtes, vorgegebenes Maß überschreitet. Der zu diesem Referenzzeitpunkt im Innenraum herrschende Unterdruck wird als Referenzdruck festgehalten und als Innendruck des Behälters angesetzt. Der tatsächliche Innendruck des Behälters stimmt wegen der Nachgiebigkeit des flexiblen Wandungsabschnittes sehr exakt mit dem Referenzdruck überein. Da sich mit weiter fortschreitender Evakuierung der Prüfling nicht weiter aufblähen kann, bleibt sein tatsächlicher Innendruck bei fehlenden oder bei nur kleinen Lecks mit guter Genauigkeit gleich dem Referenzdruck. Für die nachfolgende Feinleckbestimmung kann sehr exakt die am Prüfling anliegende Druckdifferenz bestimmt werden. Die solchermaßen bestimmte Druckdifferenz lässt Aussagen über das Vorhandensein von Feinlecks und über deren Größe mit erhöhter Genauigkeit zu. Außerdem gelingt eine zuverlässigere Unterscheidung zwischen Fein- und Groblecks.

Im Rahmen der Erfindung können verschiedene Maßnahmen zur Begrenzung des Aufblähens in Betracht kommen. Eine solche Maßnahme kann beispielsweise darin bestehen, dass der flexible Wandungsabschnitt zwar biegeweich, innerhalb seiner Wandungsebene jedoch im Wesentlichen starr, also im Wesentlichen nicht dehnbar ausgestaltet ist. Als Beispiel hierfür sei eine Siegelfolie genannt, mit der die offene Seite eines ansonsten näherungsweise starren Behälters versiegelt ist. Im technischen Sinne handelt es sich um eine Membran, die ausgehend von einer ebenen Ruhelage unter Einwirkung einer Druckdifferenz eine gewisse, aber beschränkte Wölbung einnehmen kann. Bei einem äußeren Unterdruck führt die Membranwölbung zu einer Vergrößerung des Behältervolumens. Die im Wesentlichen fehlende Dehnbarkeit der Membran begrenzt jedoch die Ausbildung einer Wölbung, womit auch das Aufblähen des Behälters und dessen Volumenzunahme begrenzt sind. Dies kann für sich alleine genommen schon als Begrenzungsmaßnahme ausreichen.

Für eine definierte, präzise Begrenzung des Aufblähens hat sich als vorteilhaft herausgestellt, dass die Prüfkammer eine Stützfläche für den mindestens einen flexiblen Wandungsabschnitt umfasst, und dass der Behälter derart im Innenraum der Prüfkammer fixiert wird, dass der flexible Wandungsabschnitt im Bereich der Stützfläche liegt und dabei zumindest partiell einen Abstand zur Stützfläche aufweist. Beim anfänglichen Aufblähen des flexiblen Wandungsabschnittes wird zunächst der genannte Abstand zur Stützfläche aufgebraucht. Anschließend wird der Zustand erreicht, bei dem die Stützfläche definiert und exakt ein weiteres Aufblähen des flexiblen Wandungsabschnittes in signifikantem Umfang verhindert. Damit kann eine deutliche Unterscheidung der beiden Evakuierungsphasen mit und ohne Volumenzuwachs des zu prüfenden Behälters getroffen werden, was die Messgenauigkeit steigert sowie die Identifikation des Referenzzeitpunktes und des zugehörigen Referenzdruckes vereinfacht.

Für die Bestimmung des Referenzzeitpunktes, an welchem die Schnelligkeit der Zunahme des Unterdrucks anwächst, kommen verschiedene Methoden in Betracht. In einer vorteilhaften Ausführungsform wird während des Evakuierens des Innenraums der Verlauf der ersten Ableitung des Unterdrucks nach der Zeit ermittelt. Außerdem wird ein Grenzwert der ersten Ableitung festgelegt. Zu dem Referenzzeitpunkt, bei dem die erste Ableitung den Grenzwert überschreitet, wird der zu diesem Referenzzeitpunkt im Innenraum herrschende Unterdruck als Referenzdruck festgehalten.

Alternativ oder ergänzend kann es zweckmäßig sein, dass während des Evakuierens des Innenraums der Verlauf der zweiten Ableitung des Unterdrucks nach der Zeit ermittelt wird, und dass zu dem Referenzzeitpunkt, bei dem der Betrag der zweiten Ableitung ein lokales Maximum aufweist, der zu diesem Referenzzeitpunkt im Innenraum herrschende Unterdruck als Referenzdruck festgehalten wird.

Beide Methoden lassen eine sehr präzise Bestimmung des fraglichen Zeitpunktes und des zugeordneten, als Referenzdruck anzusetzenden Unterdrucks zu. Je nach zeitlicher Auflösung der Messung und weiteren Randbedingungen ist die eine oder die andere Methode oder auch eine Kombination von beiden besser geeignet.

Weiter oben wurde schon erwähnt, dass die laufende Evakuierung fortgesetzt wird, bis im Innenraum ein Zielereignis erreicht ist. Das Zielereignis kann der Ablauf einer vorgegebenen Evakuierungszeit, die Entnahme eines bestimmten Volumens mittels eines Saugkolbens, oder das Erreichen eines definierten Zielvakuums sein. In einer vorteilhaften erfindungsgemäßen Variante ist das Zielereignis für den Abbruch der laufenden Evakuierung das Erreichen eines maximalen Unterdrucks im Innenraum der Prüfkammer, wobei der maximale Unterdruck die Summe einer vorgegebenen Unterdruckdifferenz und des festgehaltenen Referenzdruck ist. Der ermittelte Referenzdruck wird also als Basis für die weitere Evakuierung herangezogen, wobei die vorgegebene Unterdruckdifferenz mit guter Genauigkeit der Druckdifferenz am Prüfling während der Feinleckprüfung entspricht. Völlig losgelöst vom tatsächlichen Aufblähverhalten des Prüflings kann also eine bestimmte, für die nachfolgende Feinleckprüfung als besonders geeignet bekannte Druckdifferenz angelegt werden.

Für die Bestimmung Druckdifferenz am Prüfling muss neben dem vorstehend beschriebenen Referenzdruck Innendruck des Prüflings auch der außenseitig des Prüflings wirkende Unterdruck in der Prüfkammer bestimmt und festgehalten werden. Dies kann der Anfangs- oder Enddruck des Prüfzeitintervalls sein. Bevorzugt wird über das Prüfzeitintervall gemittelter Unterdruck im Innenraum der Prüfkammer als Prüfunterdruck angesetzt, was sich als geeignete Bezugsgröße für die bei der Bestimmung einer Leckrate herangezogene Druckdifferenz bewährt hat.

Das Vorhandensein eines Groblecks kann wie im Stand der Technik bestimmt werden. In vorteilhafter Weiterbildung der Erfindung wird jedoch ein Grenzwert, insbesondere ein Grenzunterdruck festgelegt, wobei in einem solchen Fall, in dem während der laufenden Evakuierung festgestellt wird, dass vor Erreichen des Grenzwertes die Schnelligkeit der Zunahme des Unterdrucks nicht das bestimmte, vorgegebene Maß überschreitet, von dem Vorhandensein eines Groblecks oder eines anderen Fehlers des Behälters ausgegangen wird, und dass der weitere Vorgang der Dichtheitsprüfung abgebrochen wird.

Damit wird die Auswertung des Unterdruckverlaufs beim Evakuieren nicht nur für die Bestimmung des Referenzdruckes als Basis der Feinleckanalyse, sondern in Doppelfunktion auch für die Bestimmung eines Groblecks herangezogen. Das Vorhandensein eines Groblecks und dessen Unterscheidung von einem Feinleck ist mit erhöhter Zuverlässigkeit möglich geworden.

Ein Ausführungsbeispiel der Erfindung ist nachfolgend anhand der Zeichnung näher beschrieben. Es zeigen:
- Fig. 1: in einer schematischen Schnittdarstellung ein Dichtheitsprüfsystem mit einer Prüfkammer und mit einem darin fixierten, auf Dichtigkeit zu prüfendem Behälter, wobei der Behälter einen flexiblen Wandungsabschnitt aufweist, welcher nach innen in den Behälter gewölbt ist;
- Fig. 2: die Anordnung nach Fig. 1 in einer frühen Phase der Evakuierung der Prüfkammer, wobei der flexible Wandungsabschnitt beginnt sich aufzublähen;
- Fig. 3: die Anordnung nach den Fig. 1 und 2 mit fortgeschritten evakuierter Prüfkammer, wobei der flexible Wandungsabschnitt an einer Stützfläche der Prüfkammer anliegt, und wobei der Behälter sein maximales Volumen mit einem zugehörigen Behälterinnendruck erreicht hat;
- Fig. 4: in einer schematischen Diagrammdarstellung den zeitlichen Druckverlauf in der Prüfkammer zur Bestimmung von Grob- und Feinlecks, wobei zu einem bestimmten Zeitpunkt der Evakuierung die Schnelligkeit der Zunahme des Unterdrucks anwächst und damit das Erreichen des Zustandes nach Fig. 3 angibt.

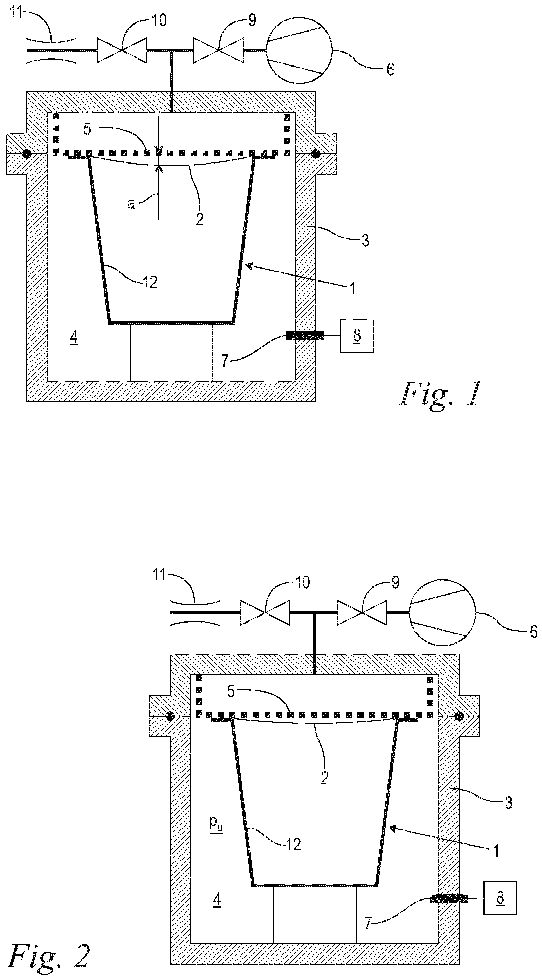

Fig. 1 zeigt in einer schematischen Schnittdarstellung ein Dichtheitsprüfsystem zur Dichtheitsprüfung eines Behälters 1. Der Behälter 1, welcher hier den Prüfling darstellt, umfasst mindestens einen Wandungsabschnitt 2, welcher insoweit flexibel ist, dass er aufgrund einwirkender Druckdifferenzen nachgeben und das Volumen im Behälter 1 signifikant verändern kann. Mittels des flexiblen Wandungsabschnittes 2 kann sich der Behälter 1 also unter Einwirkung eines außenseitig des Behälters 1 wirkenden Unterdrucks pᵤ (Figuren 2 bis 4) aufblähen. Beispielhaft ist hier ein becherförmiger Behälter 1 mit einem näherungsweise starren, also druckstabilen Grundkörper 12 gezeigt, welcher auf seiner nach oben offenen Seite mit einer biegeweichen, innerhalb der Folienebene jedoch im Wesentlichen starren, also dehnsteifen Folie zur Bildung des flexiblen Wandungsabschnittes versiegelt ist. Es können aber auch beliebige andere Behälterformen mit mindestens einem oder mit mehreren flexiblen Wandungsabschnitten vorgesehen sein, was auch insgesamt flexible Behälter einschließt. Beispielhaft seien hier Behälter wie Blister-Verpackungen, Joghurtbecher, Folienbeutel, weiche Kunststoffflaschen, Infusionsbeutel oder dergleichen insbesondere aus dem Pharma- oder Lebensmittelbereich genannt.

Das Dichtheitsprüfsystem umfasst eine Prüfkammer 3 mit einem Innenraum 4. Außerdem sind Maßnahmen zur Begrenzung des vorstehend beschriebenen Aufblähens des Behälters 1 bzw. seines flexiblen Wandungsabschnittes 2 getroffen. In der gezeigten bevorzugten Ausführungsform umfassen diese Maßnahmen eine im Innenraum 4 angeordnete Stützfläche 5 für den mindestens einen flexiblen Wandungsabschnitt 2 des zu prüfenden Behälters 1. Die Stützfläche 5 ist hier als eigenständiges Bauteil skizziert, kann aber auch durch einen oder mehrere Wand- oder Deckelabschnitte der Prüfkammer 3 gebildet sein.

Ferner umfasst das Dichtheitsprüfsystem eine Pumpeinrichtung 6 zur Erzeugung eines Unterdrucks pᵤ (Figuren 2 bis 4) im Innenraum 4 der Prüfkammer 3. Während eines weiter unten beschriebenen Evakuierungsvorganges ist die Pumpeinrichtung 6 über eine Unterdruckleitung mit dem Innenraum 4 fluidisch verbunden. Diese fluidische Verbindung kann nach Beendigung des Evakuierungsvorganges mittels eines in der Unterdruckleitung angeordneten Absperrventils 9 unterbrochen werden. Die Pumpeinrichtung 6 ist hier beispielhaft eine Vakuumpumpe. Es kann aber auch eine Venturidüse, ein Evakuierzylinder oder ein anderes geeignetes Mittel als Pumpeinrichtung 6 vorgesehen sein.

Außerdem kann für einen Kalibriervorgang ein optionales, kalibriertes Testleck 11 über eine geeignete Unterdruckleitung mit dem Innenraum 4 fluidisch verbunden werden. Auch hier ist ein zugehöriges Absperrventil 10 vorgesehen, mittels dessen die fluidische Verbindung nach Bedarf freigegeben oder unterbrochen bzw. abgesperrt werden kann.

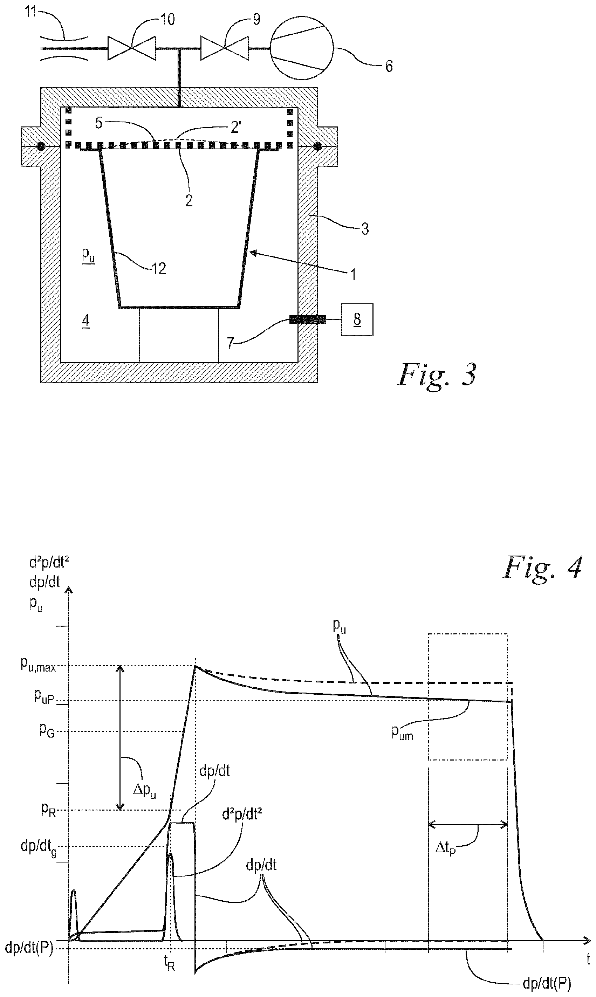

Im Innenraum 4 der Prüfkammer 3 befindet sich noch ein mit einer schematisch angedeuteten Steuereinheit 8 verbundener Druckaufnehmer 7, wobei der Druck im Innenraum und dessen zeitlicher Verlauf insbesondere gemäß Fig. 4 mittels des Druckaufnehmers 7 aufgenommen, erfasst und in der Steuereinheit 8 ausgewertet wird.

Zu Beginn des erfindungsgemäßen Verfahrens, also vor Beginn einer späteren Evakuierung, wird der Prüfling in Form des zu prüfenden Behälters 1 als weitere Maßnahme zum Zulassen und insbesondere auch zur Begrenzung des Aufblähens derart im Innenraum 4 der Prüfkammer 3 fixiert, dass der flexible Wandungsabschnitt 2 im Bereich der Stützfläche 5 liegt. "Im Bereich der Stützfläche 5" bedeutet hier, dass sich der flexible Wandungsabschnitt 2 bei einer späteren Evakuierung der Prüfkammer 3 soweit zerstörungsfrei aufblähen kann, bis er zur Anlage an die Stützfläche 5 kommt. Anfänglich darf der flexible Wandungsabschnitt 2 allenfalls in vereinzelten Bereichen, nicht jedoch unmittelbar vollflächig an der Stützfläche 5 anliegen. Vielmehr muss der flexible Wandungsabschnitt 2 zumindest partiell einen Abstand a zur Stützfläche 5 aufweisen, um Raum zum Aufblähen und für eine damit einhergehende Volumenvergrößerung zu haben. Dieser Zustand ist in schematisch in Fig. 1 dargestellt, wobei zur Verdeutlichung der flexible Wandungsabschnitt 2 nach innen ins Innere des Behälters 1 hinein gewölbt ist und folglich den genannten Abstand a zur Stützfläche 5 aufweist. Der Druck im Innenraum 4 der Prüfkammer 3 ist hierbei zunächst noch gleich dem atmosphärischen Umgebungsdruck. Auch der Innendruck im Inneren des Behälters 1 ist zumindest näherungsweise gleich dem atmosphärischen Umgebungsdruck, da über die flexible Nachgiebigkeit des Wandungsabschnittes 2 eine Druckangleichung zwischen Außen- und Innenseite des Behälters 1 stattfindet.

Hiervon ausgehend wird nun mittels der Pumpeinrichtung 6 der Innenraum 4 der geschlossenen Prüfkammer 3 kontrolliert evakuiert, sodass sich im Innenraum 4 ein Unterdruck pᵤ aufbaut. Kontrolliertes Evakuieren bedeutet hier, dass die Pumpeinrichtung 6 mit ausreichend gleichmäßiger Förderleistung ohne signifikante Stufen oder Sprünge betrieben wird. Hierfür kann eine Steuerung oder Regelung der Pumpeinrichtung 6 in Betracht kommen. Das effektive Saugvermögen einer üblichen Vakuumpumpe oder eines Ejektors sowie auch die Geschwindigkeit eines Evakuierzylinders haben sich jedoch in der Praxis als ausreichend konstant für das kontrollierte Evakuieren herausgestellt, sodass auf eine Steuerung oder Regelung verzichtet werden kann. Als Konsequenz des sich aufbauenden Unterdrucks pᵤ bläht sich der flexible Wandungsabschnitt 2 zunehmend auf und nähert sich der Stützfläche 5 an, wobei sich das Volumen des Behälters 1 vergrößert. Einzelne, eventuell schon vorhandene (hier nicht dargestellte) Berührungsabschnitte wachsen in der Fläche, während ansonsten der zumindest partiell vorhandene Abstand a verringert wird. Dieser Zustand ist schematisch in Fig. 2 dargestellt.

Mit fortschreitender Evakuierung wird ein solcher Unterdruck pᵤ erreicht, bei dem sich der flexible Wandungsabschnitt 2 an seine Stützfläche 5 soweit angelegt hat, dass eine weitere signifikante Volumenvergrößerung des Behälters 1 nicht mehr möglich ist. Es wird also deutlich, dass die Stützfläche 5 und die beschriebene Positionierung des Behälters 1 mit seinem flexiblen Wandungsabschnitt 2 relativ zu dieser Stützfläche 5 als Maßnahmen zur Begrenzung des Aufblähens des Behälters 1 unter Einwirkung des äußeren Unterdrucks pᵤ und der sich daraus ergebenen Druckdifferenz zum Behälterinnendruck wirken. Dieser Zustand ist schematisch in Fig. 3 dargestellt. An gleicher Stelle ist auch eine Variante der Maßnahmen zur Begrenzung des Aufblähens angedeutet: Bei fehlender Stützfläche 5 kann die weiter oben schon erwähnte Dehnsteifigkeit des membranartigen Wandungsabschnittes 2 als eine solche Begrenzungsmaßnahme wirken. Es kann ein durch die Dehnsteifigkeit begrenztes Aufblähen erfolgen, wobei hier der zugehörige maximal aufgeblähte Wandungsabschnitt mit 2' gekennzeichnet und gestrichelt dargestellt ist. Bis zu dem Moment des abschließenden Anlegens an die Stützfläche 5, jedenfalls bis zum Erreichen des maximalen Aufblähens und damit des maximalen Behältervolumens konnte noch eine Druckangleichung zwischen Außen- und Innenseite des Behälters 1 stattfinden, so dass in diesem Moment der Innendruck im Behälter 1 gleich dem aktuell herrschenden Unterdruck pᵤ ist.

Im weiteren Verlauf der Evakuierung, also bei weiter steigendem Unterdruck pᵤ bzw. bei weiter sinkendem Druck im Innenraum 4 verhindern die vorstehend beschriebenen Maßnahmen insbesondere in Form der Stützfläche 5, dass sich der Behälter 1 bzw. sein flexibler Wandungsabschnitt 2 weiter aufbläht. Der flexible Wandungsabschnitt 2 kann nicht mehr eine Druckangleichung zwischen Außen- und Innenseite des Behälters 1 herbeiführen. Das Volumen des Behälters 1 und damit dessen Innendruck bleiben bei weiter steigendem Unterdruck pᵤ zumindest näherungsweise konstant.

Hierauf aufbauend entwickeln sich Druckverläufe des Unterdrucks pᵤ, wie sie schematisch im Druck-Zeit-Diagramm nach Fig. 4 dargestellt sind, und wie sie mittels des Druckaufnehmers 7 (Figuren 1 bis 3) während eines Testzyklus aufgenommen wurden. Im Diagramm nach Fig. 4 sind neben dem Unterdruck pᵤ über der Zeit t ergänzend auch der Verlauf der ersten Ableitung dp/dt des Unterdrucks pᵤ nach der Zeit sowie der Verlauf der zweiten Ableitung d²p/dt² des Unterdrucks pᵤ nach der Zeit eingetragen. Für eine bessere Übersicht ist die zweiten Ableitung d²p/dt² des Unterdrucks pᵤ nur für den zeitlichen Bereich der Evakuierung dargestellt.

Zunächst wird der Innenraum der geschlossenen, den Prüfling beinhaltenden Prüfkammer 3 mittels der Pumpeinrichtung unter Aufbau eines steigenden Unterdrucks pᵤ kontrolliert solange evakuiert, bis ein später noch genauer erwähntes Zielereignis erreicht ist. Zum Zeitpunkt des Zielereignisses hat der herrschende Unterdruck pᵤ seinen Maximalwert, also einen maximalen Unterdruck p_{u,max} erreicht. Mit dem Erreichen des Zielereignisses wird die laufende Evakuierung insbesondere durch Schließen des Absperrventils 9 bzw. durch Abschalten der Pumpeinrichtung 6 abgebrochen. Es folgt eine Beruhigungsphase, in der sich der im Innenraum 4 herrschende Unterdruck pᵤ zunächst leicht abschwächt und dann stabilisiert. An die Beruhigungsphase schließt sich ein vorgegebenes Prüfzeitintervall Δt_{P} an, in welchem die nachfolgend näher beschriebene Feinleckprüfung durchgeführt wird. Nach dem Prüfzeitintervall Δt_{P} wird der herrschende Unterdruck pᵤ über eine nicht dargestellte Belüftungsleitung auf den atmosphärischen Umgebungsdruck abgebaut. Danach können die Prüfkammer 3 geöffnet und der Behälter 1 entnommen werden.

Die Auswertung des vorstehend grob umrissenen zeitlichen Verlaufs des Unterdrucks pᵤ wird gemäß der Erfindung insbesondere in der Steuereinheit 8 wie folgt vorgenommen:
Während der laufenden Evakuierung wird der zeitliche Verlauf des sich im Innenraum 4 aufbauenden Unterdrucks pᵤ ermittelt, und es wird geprüft, wie schnell der Unterdruck pᵤ im Innenraum 4 zunimmt. Zur Erläuterung gelten die in Fig. 4 gezeigten Verläufe für einen zu prüfenden Behälter 1, welcher entweder dicht ist oder ein Feinleck hat, welcher jedoch kein Grobleck aufweist. Es ist erkennbar, dass der Unterdruck anfänglich mit einer bestimmten Änderungsrate bzw. mit einer bestimmten Schnelligkeit ansteigt. Ab einem bestimmten Zeitpunkt wächst die Schnelligkeit der Zunahme des Unterdrucks pᵤ jedoch nahezu sprunghaft an, was an einem steileren Verlauf der Kurve des Unterdrucks pᵤ erkennbar ist. Bei gleichmäßigem Betrieb der Pumpeinrichtung 6 ist der Verlauf der Kurve des Unterdrucks pᵤ nur abschnittsweise gleichmäßig bzw. näherungsweise proportional zur Zeit t. Es bilden sich zwei Abschnitte aus, die für sich genommen gleichmäßig verlaufen, jedoch mit einem "Knick" aneinandergrenzen. Dieser "Knick" im Druck-Zeit-Diagramm nach Fig. 4 markiert den Moment, in dem sich der flexible Wandungsabschnitt 2 gemäß Fig. 3 an die Stützfläche 5 abschließend angelegt hat. Der "Knick" entsteht dadurch, dass das zu evakuierende Volumen vor dem "Knick" größer ist als danach. Vor dem "Knick", also solange sich der zu prüfende Behälter 1 noch aufblähen kann, muss das gesamte Volumen des Innenraums 4, also das Volumen innerhalb und außerhalb des Prüflings evakuiert werden. Ab und nach dem Knick hat der Prüfling im Wesentlichen seine maximale Größe erreicht. Im gezeigten Ausführungsbeispiel liegt dazu der flexible Wandungsabschnitt 2 an der Stützfläche 5 derart an, dass das Aufblähen und die Volumenvergrößerung des Behälters 1 gestoppt sind. Ab dann wird nur noch das Volumen außerhalb des Prüflings evakuiert. Bei kontinuierlicher, und insbesondere zumindest annähernd gleichbleibender Förderleistung der Pumpeinrichtung 6 führt die Verringerung des zu evakuierenden Volumens zu einem sprunghaften, knickartigen Anstieg des Unterdruckgradienten.

Zeitpunkt und zugehöriger Unterdruck pᵤ des sprunghaften Anstieges lassen sich aus dem Druck-Zeit-Diagramm nach Fig. 4 ablesen, was in der Praxis mittels der Steuereinheit 8 vorgenommen wird. Zur Vermeidung von Fehlablesungen wird nicht jeder kleine "Knick" zugelassen. Vielmehr wird geprüft, ob zu einem bestimmten Zeitpunkt die Schnelligkeit der Zunahme des Unterdrucks pᵤ anwächst und dabei ein bestimmtes, vorgegebenes Maß überschreitet. Der Zeitpunkt, bei dem dies der Fall ist, ist ein Referenzzeitpunkt t_{R}, bei dem der im Innenraum 4 herrschende Unterdruck als Referenzdruck p_{R} festgehalten und später bei der Feinleckprüfung als Innendruck im Behälter 1 angesetzt wird.

Für den Zeitraum der Evakuierung, also bis zum Erreichen des maximalen Unterdrucks p_{u,max} werden noch der Verlauf der ersten Ableitung dp/dt des Unterdrucks pᵤ nach der Zeit sowie der Verlauf der zweiten Ableitung d²p/dt² des Unterdrucks pᵤ nach der Zeit ermittelt. Beide sind ebenfalls in Fig. 4 eingetragen. Und beide dienen alternativ oder in Kombination zur Ermittlung des vorstehend schon erwähnten "bestimmten, vorgegebenen Maßes" für die Schnelligkeit der Zunahme des Unterdrucks pᵤ.

Als eine Identifikationshilfe wurde ein Grenzwert dp/dt_{g} der ersten Ableitung dp/dt festgelegt, und schematisch in Fig. 4 eingetragen. Dort ist erkennbar, dass beim fraglichen "Knick" in der Druckverlaufskurve deren erste Ableitung dp/dt den Grenzwert dp/dt_{g} überschreitet. Der zugehörige Zeitpunkt ist der gesuchte Referenzzeitpunkt t_{R}, bei dem der im Innenraum 4 herrschende Unterdruck als Referenzdruck p_{R} festgehalten wird.

Auch der Verlauf der zweiten Ableitung d²p/dt² des Unterdrucks pᵤ ist für eine Identifikation des "Knicks" in der Druckverlaufskurve geeignet. Es ist zu erkennen, dass zum Zeitpunkt des "Knicks" der Betrag der zweiten Ableitung d²p/dt² ein lokales Maximum aufweist, welches sich exakt in der Steuereinheit 8 bestimmen lässt. Und auch bei diesem Ansatz gilt mit gleichem Ergebnis, dass der zugehörige Zeitpunkt der gesuchte Referenzzeitpunkt t_{R} ist, bei dem der im Innenraum 4 herrschende Unterdruck als Referenzdruck p_{R} festgehalten wird.

In Fig. 4 ist noch erkennbar, dass der Referenzzeitpunkt t_{R} mit dem zugehörigen Referenzdruck p_{R} noch vor Erreichen eines Grenzwertes, hier noch vor Erreichen eines Grenzunterdrucks p_{G} aufgefunden wurden. Als Konsequenz wird davon ausgegangen, dass kein Grobleck vorliegt, und dass das Verfahren für die Identifikation eines möglicherweise vorhandenen Feinlecks fortgeführt wird.

Weiter oben wurde erwähnt, dass die laufende Evakuierung über die Bestimmung des Referenzdruckes p_{R} hinaus fortgesetzt wird, und zwar bis zum Erreichen eines Zielereignisses, worauf hin dann die laufende Evakuierung abgebrochen wird. Vorliegend wird der ermittelte Referenzdruck p_{R} für die Bestimmung des Zielereignisses herangezogen. Es wird eine Unterdruckdifferenz Δpᵤ zur Bestimmung des maximalen Unterdrucks p_{u, max} im Innenraum (4) der Prüfkammer (3) vorgegeben, wobei das Zielereignis das Erreichen dieses maximalen Unterdrucks p_{u, max} ist. Dafür wird der maximale Unterdruck p_{u, max} als die Summe der vorgegebenen Unterdruckdifferenz Δpᵤ und des festgehaltenen Referenzdruckes p_{R} ermittelt und festgelegt. Es wird also bis zum Erreichen der Unterdruckdifferenz Δpᵤ zum festgehaltenen Referenzdruck p_{R} evakuiert.

Die Identifikation eines möglicherweise vorhandenen Feinlecks folgt nach Beendigung der Evakuierung und nach der schon erwähnten Beruhigungsphase während des ebenfalls schon erwähnten Prüfzeitintervalls Δt_{P}. Für die quantitative Benennung eines Feinlecks sind zwei wesentliche Angaben erforderlich: Erstens muss die Leckrate bekannt sein, die sich im Druck-Zeit-Diagramm als zeitlicher Gradient dp/dt(P) des Unterdrucks pᵤ während Prüfzeitintervalls Δt_{P} manifestiert. Zweitens muss die Druckdifferenz zwischen Innen- und Außenseite des Prüflings mit ausreichender Genauigkeit bekannt sein. Aus der Druckdifferenz und der Leckrate lässt sich über an sich bekannte Ansätze auf die Größe eines möglicherweise vorhandenen Feinlecks schließen.

Demnach wird gemäß der Erfindung während des vorgegebenen Prüfzeitintervalls Δt_{P} die Ermittlung des zeitlichen Verlaufs des Unterdrucks pᵤ im Innenraum 4 fortgesetzt, wobei während des vorgegebenen Prüfzeitintervalls Δt_{P} der zeitliche Gradient dp/dt(P) des Unterdrucks pᵤ mittels der Steuereinheit 8 ermittelt wird. Hierzu sind in Fig. 4 vergleichsweise zwei Fälle aufgezeigt, nämlich zum einen der Fall eines intakten, völlig dichten Behälters 1, und zum anderen der Fall eines Behälters 1 mit einem Feinleck. Für den intakten, dichten Behälter 1 sind die Verläufe des Unterdrucks pᵤ und seiner ersten Ableitung dp/dt mit gestrichelter Linie dargestellt, während für den Behälter 1 mit Feinleck die Verläufe des Unterdrucks pᵤ und seiner ersten Ableitung dp/dt mit durchgezogener Linie dargestellt sind. In beiden Fällen ist erkennbar, dass der Unterdruck pᵤ unmittelbar nach der Beendigung der Evakuierung zunächst mit negativer erster Ableitung dp/dt leicht abfällt. Beim intakten Behälter 1 stabilisiert sich der Unterdruck pᵤ dann quasi vollständig auf einen bestimmten Wert, wobei sich die erste Ableitung dp/dt etwa asymptotisch auf null verringert (gestrichelte Linie). Während des vorgegebenen Prüfzeitintervalls Δt_{P} ist also ein zeitlicher Gradient dp/dt(P) des Unterdrucks pᵤ zumindest näherungsweise gleich null, sodass auch die hieraus rechnerisch abgeleitete Leckrate entsprechend als null anzusehen ist. In einem solchen Fall wird davon ausgegangen, dass kein Feinleck vorliegt.

Im Fall eines Behälters 1 mit vorhandenem Feinleck sinkt der Unterdruck pᵤ jedoch fortlaufend auch während des Prüfzeitintervalls Δt_{P}, sodass hier ein zeitlicher Gradient dp/dt(P) des Unterdrucks pᵤ mit einem von null verschiedenen, negativen Wert ermittelt wird (durchgezogene Linie). In Folge einer zuvor vorgenommenen Kalibrierung mittels des kalibrierten Testlecks 11 (Fig. 1 bis 3) kann aus diesem zeitlichen Gradienten dp/dt(P) auf die Leckrate geschlossen und diese quantifiziert werden.

Für die Bestimmung der Druckdifferenz zwischen Innen- und Außenseite des Prüflings wird ein zum Prüfzeitintervall Δt_{P} gehöriger Unterdruck pᵤ im Innenraum 4 der Prüfkammer 3 als Prüfunterdruck p_{uP} angesetzt, welcher bei der Feinleckprüfung außenseitig auf den Behälter 1 einwirkt. Im gezeigten bevorzugten Ausführungsbeispiel ist dies ein über das Prüfzeitintervall Δt_{P} gemittelter Unterdruck pᵤₘ. Außerdem wird, wie schon erwähnt, der beim Evakuieren ermittelte Referenzdruck p_{R} als Innendruck im Behälter 1 angesetzt. Die Differenz zwischen dem Prüfunterdruck p_{uP} und dem Referenzdruck p_{R} stellt mit hoher Genauigkeit die gesuchte tatsächliche Druckdifferenz zwischen Innen- und Außenseite des Prüflings während des Prüfzeitintervalls Δt_{P} dar. Hieraus und aus der ebenfalls ermittelten Leckrate kann eine qualifizierte Aussage über das Vorhandensein eines Feinlecks und dessen Größe mit hoher Genauigkeit und Zuverlässigkeit getroffen werden. Diese Aussage wird aus einem ausgewählten, vorgegebenen mathematisch-physikalischen Zusammenhang gewonnen. Derartige Zusammenhänge sind an sich dem Fachmann allgemein bekannt, und zumindest einer von ihnen wird je nach den herrschenden Prüfbedingungen nach Bedarf herangezogen.

Die tatsächliche Wahl eines solchen Zusammenhangs ist jedoch für das Prinzip des erfindungsgemäßen Verfahrens ohne Bedeutung, sodass hier nicht auf die Details davon eingegangen werden muss.

Für die Bestimmung eines möglicherweise vorhandenen Groblecks muss anders als im Stand der Technik nicht abgewartet werden, ob der Unterdruck pᵤ sich nicht ausreichend aufbaut oder aus dem Prüffenster des Prüfzeitintervalls Δt_{P} herausfällt. Vielmehr kann schon zu einem frühen Zeitpunkt des Evakuierens zuverlässig erkannt werden, ob ein Grobleck vorliegt. Das Ausbleiben des vorstehend erwähnten "Knicks" im Druck-Zeit-Diagramm während des Evakuierens deutet nämlich auf das Vorhandensein eines Groblecks hin. Ein eventuell vorhandenes Grobleck stellt nämlich einen permanenten Druckausgleich zwischen Innen- und Außenseite des Prüflings her. Als Konsequenz sind bei einem Grobleck der Unterdruck im zu prüfenden Behälter 1 und auch im Innenraum 4 der Prüfkammer 3 immer annäherungsweise gleich. Dadurch gibt es nahezu keine Druckdifferenz und demzufolge nahezu keine auf den flexiblen Wandungsabschnitt 2 einwirkende Kraft. Das legt nahe, dass sich der flexible Wandungsabschnitt 2 nicht an die Stützfläche 5 anlegt oder in anderer Weise seine begrenzte maximale Wölbung oder Aufblähung erreicht. Bei einem sehr flexiblen Wandungsabschnitt 2 wäre dies aber dennoch möglich. Unabhängig davon, ob sich der Wandungsabschnitt 2 nun aufbläht oder nicht, muss aber bei einem Grobleck wegen des permanenten Druckausgleichs immer das gesamte Volumen des Innenraums 4, also das Volumen innerhalb und außerhalb des Prüflings evakuiert werden. Dadurch kann es keinen "Knick" im Verlauf der Druck-Zeit-Kurve geben.

Um diesen Fall zu identifizieren, wird zunächst ein Grenzwert festgelegt. Dieser Grenzwert kann ein zeitlicher Grenzwert oder der Grenzwert einer abgepumpten Gasmenge sein. Vorliegend handelt es sich bei dem Grenzwert um einen Grenzunterdruck p_{G} In einem solchen Fall, in dem während der laufenden Evakuierung festgestellt wird, dass vor Erreichen des Grenzwertes, hier also des Grenzunterdrucks p_{G} die Schnelligkeit der Zunahme des Unterdrucks pᵤ nicht das bestimmte, vorgegebene Maß überschreitet, wenn sich also kein "Knick" im Druck-Zeit-Diagramm einstellt, ist von dem Vorhandensein eines Groblecks oder eines anderen Fehlers des Behälters 1 auszugehen. In diesem Fall wird der weitere Vorgang der Dichtheitsprüfung abgebrochen. Diese erfindungsgemäße Form der Bestimmung eines Groblecks und dessen Unterscheidung von einem Feinleck hat sich als sehr zuverlässig herausgestellt.

## Patentansprüche

1. Verfahren zur Dichtheitsprüfung eines Behälters (1) mittels eines Dichtheitsprüfsystems, wobei der Behälter (1) mindestens einen flexiblen Wandungsabschnitt (2) umfasst, mittels dessen sich der Behälter (1) unter Einwirkung eines äußeren Unterdrucks (pᵤ) aufblähen kann, wobei Maßnahmen zur Begrenzung des Aufblähens getroffen sind, wobei das Dichtheitsprüfsystem eine Prüfkammer (3) mit einem Innenraum (4) zur Aufnahme des Behälters (1), sowie eine Pumpeinrichtung (6) zur Erzeugung eines Unterdrucks (pᵤ) im Innenraum (4) der Prüfkammer (3) aufweist, und wobei das Verfahren folgende Verfahrensschritte umfasst:
- Der Behälter (1) wird derart im Innenraum (4) der Prüfkammer (3) fixiert, dass er sich im Bereich seines flexiblen Wandungsabschnittes (2) begrenzt aufblähen kann.
- Mittels der Pumpeinrichtung (6) wird anschließend der Innenraum (4) der geschlossenen Prüfkammer (3) kontrolliert evakuiert, wobei der zeitliche Verlauf eines sich im Innenraum (4) aufbauenden Unterdrucks (pᵤ) ermittelt wird, und wobei geprüft wird, wie schnell der Unterdruck (pᵤ) im Innenraum (4) zunimmt.
- Sofern während der laufenden Evakuierung festgestellt wird, dass zu einem bestimmten Referenzzeitpunkt (t_{R}) die Schnelligkeit der Zunahme des Unterdrucks (pᵤ) anwächst und ein bestimmtes, vorgegebenes Maß überschreitet, wird der zu diesem Referenzzeitpunkt (t_{R}) im Innenraum (4) herrschende Unterdruck als Referenzdruck (p_{R}) festgehalten.
- Die laufende Evakuierung wird fortgesetzt, bis ein Zielereignis erreicht ist, worauf hin die laufende Evakuierung abgebrochen wird.
- Zumindest während eines nachfolgenden, vorgegebenen Prüfzeitintervalls (Δt_{P}) wird die Ermittlung des zeitlichen Verlaufs des Unterdrucks (pᵤ) im Innenraum (4) fortgesetzt, wobei während des vorgegebenen Prüfzeitintervalls (Δt_{P}) ein zeitlicher Gradient (dp/dt(P)) des Unterdrucks (pᵤ) und hieraus eine Leckrate eines möglicherweise vorhandenen Feinlecks im Behälter (1) bestimmt wird.
- Ein zum Prüfzeitintervall (Δt_{P}) gehöriger Unterdruck (pᵤ) im Innenraum (4) der Prüfkammer (3) wird als Prüfunterdruck (p_{uP}) angesetzt, und der Referenzdruck (p_{R}) wird als Innendruck im Behälter (1) angesetzt, wobei aus der Differenz des Prüfunterdrucks (p_{uP}) zum Innendruck des Behälters (1) sowie aus der Leckrate nach einem vorgegebenen Zusammenhang die Größe des möglicherweise vorhandenen Feinlecks im Behälter (1) bestimmt wird.

2. Verfahren nach Anspruch 1,
**dadurch gekennzeichnet, dass** als Maßnahmen zur Begrenzung des Aufblähens die Prüfkammer (3) eine Stützfläche (5) für den mindestens einen flexiblen Wandungsabschnitt (2) umfasst, und dass der Behälter (1) derart im Innenraum (4) der Prüfkammer (3) fixiert wird, dass der flexible Wandungsabschnitt (2) im Bereich der Stützfläche (5) liegt und dabei zumindest partiell einen Abstand (a) zur Stützfläche (5) aufweist.

3. Verfahren nach Anspruch 1 oder 2,
**dadurch gekennzeichnet, dass** während des Evakuierens des Innenraums (4) der Verlauf der ersten Ableitung (dp/dt) des Unterdrucks (pᵤ) nach der Zeit ermittelt wird, dass ein Grenzwert (dp/dt_{g}) der ersten Ableitung (dp/dt) festgelegt wird, und dass zu dem Referenzzeitpunkt (t_{R}), bei dem die erste Ableitung (dp/dt) den Grenzwert (dp/dt_{g}) überschreitet, der zu diesem Referenzzeitpunkt (t_{R}) im Innenraum (4) herrschende Unterdruck als Referenzdruck (p_{R}) festgehalten wird.

4. Verfahren nach einem der Ansprüche 1 bis 3,
**dadurch gekennzeichnet, dass** während des Evakuierens des Innenraums (4) der Verlauf der zweiten Ableitung (d²p/dt²) des Unterdrucks (pᵤ) nach der Zeit ermittelt wird, und dass zu dem Referenzzeitpunkt (t_{R}), bei dem der Betrag der zweiten Ableitung (d²p/dt²) ein lokales Maximum aufweist, der zu diesem Referenzzeitpunkt (t_{R}) im Innenraum (4) herrschende Unterdruck als Referenzdruck (p_{R}) festgehalten wird.

5. Verfahren nach einem der Ansprüche 1 bis 4,
**dadurch gekennzeichnet, dass** das Zielereignis für den Abbruch der laufenden Evakuierung das Erreichen eines maximalen Unterdrucks (p_{u, max}) im Innenraum (4) der Prüfkammer (3) ist, wobei der maximale Unterdruck (p_{u, max}) die Summe einer vorgegebenen Unterdruckdifferenz (Δpᵤ) und des festgehaltenen Referenzdruckes (p_{R}) ist.

6. Verfahren nach einem der Ansprüche 1 bis 5,
**dadurch gekennzeichnet, dass** ein über das Prüfzeitintervall (Δt_{P}) gemittelter Unterdruck (pᵤₘ) im Innenraum (4) der Prüfkammer (3) als Prüfunterdruck (p_{uP}) angesetzt wird.

7. Verfahren nach einem der Ansprüche 1 bis 6,
**dadurch gekennzeichnet, dass** ein Grenzwert, insbesondere ein Grenzunterdruck (p_{G}) festgelegt wird, und dass in einem solchen Fall, in dem während der laufenden Evakuierung festgestellt wird, dass vor Erreichen des Grenzwertes die Schnelligkeit der Zunahme des Unterdrucks (pᵤ) nicht das bestimmte, vorgegebene Maß überschreitet, von dem Vorhandensein eines Groblecks oder eines anderen Fehlers des Behälters (1) ausgegangen wird, und dass der weitere Vorgang der Dichtheitsprüfung abgebrochen wird.
